# EUROPÄISCHE PATENTANMELDUNG

(11) **EP 1 858 261 A1**
(43) Veröffentlichungstag der Anmeldung: **21.11.2007**
(21) Anmeldenummer: 06405213.7
(22) Anmeldetag: 16.05.2006
(51) Int. Cl.: H04N 7/14, H04M 1/725

(54) **Echtzeitübertragung von Videodaten**

(71) Anmelder: Ascom (Schweiz) AG, 3000 Bern 14 (CH)
(72) Erfinder: Singeisen, Felix, 4512 Bellach (SO) (CH)
(74) Vertreter: Roshardt, Werner Alfred

(57) **Zusammenfassung**

Bei einem für die Videotelefonie ausgerüsteten Mobiltelefon (1) werden die einzelnen Module (2.1 - 2.13) des Betriebssystems (2) bzw. der Videotelefonie Applikationssoftware beim Einschalten des Mobiltelefons zumindest zum Teil in einer bestimmten Reihenfolge (, 8.1-8.6) in den Arbeitsspeicher geladen. Das Betriebssystem (2) stellt hierbei typischerweise keine offenen, d. h. von ausserhalb des Betriebssystems zugänglichen Schnittstellen zu den übertragenen Videodaten zur Verfügung. Es ist folglich nicht möglich, auf diese Videodaten zuzugreifen. Gemäss der Erfindung wird nun die Reihenfolge, in welcher die einzelnen Softwaremodule geladen werden, verändert, indem zwischen zwei Modulen (2.1 und 2.2 bzw. 2.7 und 2.8) jeweils ein zusätzliches Softwaremodul (11.1 bzw. 11.2) geladen wird. Diese beiden zusätzlichen Softwaremodule (11.1, 11.2) umfassen jeweils eine offene, d. h. von aussen zugängliche Schnittstelle (12.1, 12.2) über welche auf die bei der Videotelefonie übertragenen Videodaten zugegriffen werden kann. Beim Senden wird es so möglich, die von der Kamera erzeugten Videodaten durch externe, auf einem Speicher 7 gespeicherte Videodaten zu ersetzen und die empfangenen Videodaten können auf einem Speicher 7 abgespeichert werden. Dadurch können die gesendeten und die empfangenen Videodaten eingehend analysiert werden, um beispielsweise eine Qualitätsbeurteilung der übertragenen Videotelefoniebilder durchzuführen.

## Beschreibung

### Technisches Gebiet

Die Erfindung betrifft ein Verfahren zur Echtzeitübertragung von Videodaten mit einem Kommunikationsgerät zur drahtlosen Kommunikation, wobei das Kommunikationsgerät eine Gerätesoftware und eine in die Gerätesoftware integrierte Übertragungssoftware mit zumindest zwei Modulen zur Verarbeitung der Videodaten umfasst und die Videodaten bei der Echtzeitübertragung mit dem ersten und danach mit dem zweiten Modul verarbeitet werden. Die Erfindung betrifft weiter ein Kommunikationsgerät zur drahtlosen Kommunikation mit Mitteln zur Übertragung von Videodaten in Echtzeit mit einer auf einem Speicher des Kommunikationsgerätes gespeicherten Gerätesoftware und einer in die Gerätesoftware integrierten Übertragungssoftware mit zumindest zwei Modulen zur Verarbeitung der Videodaten bei der Echtzeitübertragung mit dem ersten und danach mit dem zweiten Modul. Zudem betrifft die Erfindung eine Testvorrichtung mit einem solchen Kommunikationsgerät.

### Stand der Technik

Im Bereich Telekommunikation wurden und werden den Konsumenten laufend neue Dienste zur Verfügung gestellt. Einer dieser Dienste ist die so genannte Videotelefonie (VT), bei welcher zwei Teilnehmer ein Telefongespräch miteinander führen können, sich aber nicht nur gegenseitig hören, sondern auch sehen können, da zusätzlich zum Sprachsignal auch ein Bildsignal übermittelt wird. Hierfür müssen die jeweiligen Endgeräte neben einem Mikrofon und einem Lautsprecher auch über eine Kamera und ein Display verfügen. Einen derartigen Videotelefonie-Service gibt es beispielsweise auch für den Mobilfunkstandard UMTS (Universal Mobile Telecommunication System). Dieser Kommunikationsdienst ist standardisiert nach ITU (International Telecommunication Union) 3G-324M. Eine kurze Beschreibung dieses Protokolls und des Videotelefonie-Services ist beispielsweise im Artikel "Das 3G-324M Protokoll für Video-Telefonie" von Dr. Marwan A. Jabri in der Ausgabe 9-10/2005 der Zeitschrift "telekom praxis" zu finden.

Die Videotelefonie nach diesem Standard ermöglicht die gleichzeitige Übertragung von Sprache und Bild zwischen zwei Kommunikationsteilnehmern in Echtzeit mit einer Bildrate von maximal 15 Bildern pro Sekunde, wobei für die Übertragung ein leitungsverri-iittelter Trägerkanal mit 64 kbit/s (Kilobit pro Sekunde) genutzt wird. Um diesen Dienst zu nutzen, gibt es verschiedene Möglichkeiten. Beispielsweise kann dieser Dienst mit einem Computer genutzt werden, welcher hierfür mit einer Kamera, einem Mikrofon sowie einer entsprechenden Software (beispielsweise eine 2-Weg VT PC Applikationssoftware mit integriertem 3G-324M Protokollstack wie etwa die Software Microsoft NetMeeting) ausgerüstet werden muss. Für den UMTS Verbindungsaufbau kann ein UMTS Mobiltelefon als Modem oder eine so genannte PCMCIA (Personal Computer Memory Card International Association) Karte verwendet werden. Der Videotelefoniedienst kann aber auch mit einem Mobiltelefon genutzt werden, welches über eine integrierte Kamera sowie eine integrierte VT-Software (beispielsweise eine 2-Weg VT Applikationssoftware mit integriertem 3G-324M Protokollstack wie etwa Packet Video 2Way Communicator oder Qualcomm 2Videophone) verfügt. Bei entsprechend ausgebildeten Mobiltelefonen ist die VT-Software inklusive Protokollstack ein integrierter Bestandteil der Mobiltelefonsoftware. Es sind bereits Mobiltelefone auf dem Markt (z. B. Nokia 6680, Samsung SGH-Z130, Sony-Ericsson V800 oder Motorola V1050), die zur Nutzung des Videotelefoniedienstes ausgerüstet sind.

Weitere Informationen zu Multimedia Geräten nach dem 3G-324M Standard sind in diversen Publikationen der 3GPP (3rd Generation Partnership Project) zu finden - beispielsweise in "Technical Specification 3GPP TS 26.111 V3.4.0 (2000-12)"; "Technical Specification 3GPP TS 26.110 V3.1.0 (2001-03)"; oder auch in "Technical Specification 3GPP TS 26.911 V3.4.0 (2003-03)". Diese Veröffentlichungen umfassen Informationen zu verschiedenen Aspekten, unter anderem zu den Gruppen-Services, zu Systemaspekten sowie den Codecs für Geräte nach dem 3G-324M Standard.

Die Servicequalität des Videotelefonie-Services bei der Nutzung mit Mobiltelefonen hängt unter anderem von der Qualität der beim empfangenden Kommunikationsteilnehmer auf dem Display dargestellten Videobilder ab. Diese wiederum wird unter anderem von der Qualität der Verarbeitung der Videodaten im Mobiltelefon des Senders und im Mobiltelefon des Empfängers sowie von der Qualität der Datenübertragung zwischen den beiden Mobiltelefonen beeinflusst.

Um nun beispielsweise eine Beurteilung der Qualität der Videobilder vornehmen zu können, müssten die gesendeten sowie die empfangenen Videodaten miteinander verglichen werden können. Die Videotelefonie-Software ist aber wie bereits erwähnt ein integrierter Bestandteil der Mobiltelefonsoftware, welche quasi eine Art Blackbox ist, in welche das Betriebssystem sowie die Videotelefonie-Software eingebunden, d. h vollständig eingekapselt sind. Dies bedeutet, dass die mit der in das Mobiltelefon des Senders integrierten Kamera erzeugten Videodaten in die Blackbox eingespiesen und von der Blackbox in Echtzeit versendet werden und somit im Mobiltelefon nicht zugreifbar sind. Nach der Übertragung zum Mobiltelefon des Empfängers gelangen die Videodaten direkt in diese Blackbox, werden in Echtzeit auf dem Display des empfangenden Mobiltelefons dargestellt und sind somit auch im Mobiltelefon des Empfängers nicht zugreifbar. Da weder die gesendeten, noch die empfangenen Videodaten zugreifbar sind, können sie auch nicht miteinander verglichen werden. Folglich ist es auch nicht möglich, eine möglichst objektive Beurteilung der Servicequalität des Videotelefonie-Services mit Mobiltelefonen durchzuführen.

Um eine Qualitätsbeurteilung des Videotelefonie-Services durchzuführen, werden bisher für die Videotelefonie ausgerüstete Computer verwendet. Bei diesen konnte genau gesteuert werden, welche Videodaten übertragen werden sollten und die empfangenen Daten konnten auf dem Empfangscomputer gespeichert und später mit den gesendeten Videodaten verglichen werden. Allerdings benötigt man hierfür zusätzliche Hard- und Software mit der benötigten Ausstattung, was wiederum sehr teuer ist.

### Darstellung der Erfindung

Aufgabe der Erfindung ist es, ein dem eingangs genannten technischen Gebiet zugehörendes Verfahren bzw. Kommunikationsgerät zu schaffen, welches es erlaubt, auf die zu sendenden bzw. empfangenen Videodaten zuzugreifen.

Die Lösung der Aufgabe ist durch die Merkmale des Anspruchs 1 definiert. Gemäss der Erfindung wird beim Einschaltvorgang des Kommunikationsgerätes ein zusätzliches Softwaremodul in den Arbeitsspeicher des Kommunikationsgerätes geladen. Bei der Echtzeitübertragung der Videodaten werden diese Videodaten dann zwischen dem ersten und dem zweiten Modul mit diesem zusätzlichen Softwaremodul verarbeitet, wobei über eine externe, d. h. von aussen zugängliche Schnittstelle des zusätzlichen Softwaremoduls direkt auf die Videodaten zugegriffen wird.

Damit das zusätzliche Softwaremodul beim Einschalten des Kommunikationsgerätes überhaupt in den Arbeitsspeicher geladen werden kann, muss es zunächst auf einem nicht flüchtigen Speicher (d. h. ein Speicher, dessen Speicherinhalt bei einer Unterbrechung der Versorgungsenergie verloren geht) des Kommunikationsgeräts gespeichert werden.

Der Begriff "von aussen" bedeutet in diesem Zusammenhang "von ausserhalb der erwähnten Blackbox". Interne, d. h. von aussen nicht zugängliche Schnittstellen zwischen den verschiedenen Modulen der Übertragungssoftware sowie zu anderen Modulen der Mobiltelefonsoftware bestehen nämlich durchaus, damit die Videodaten zwischen diesen Modulen, beispielsweise von der Antenne zum Display des Mobilfunkgeräts, übertragen werden können. Die Hersteller derartiger Kommunikationsgeräte, d. h. Mobilfunktelefone oder anderer Geräte für die mobile Telekommunikation, haben typischerweise kein Interesse daran, diese internen Schnittstellen oder Daten offen zu legen. Es ist auch nicht davon auszugehen, dass die Hersteller diese Strategie in naher oder mittlerer Zukunft ändern und in Ihren Mobiltelefonsoftwarepaketen von aussen zugängliche Schnittstellen anbieten werden. Des Weiteren ist die Mobiltelefonsoftware typischerweise komplett abgeschottet und für zusätzliche Applikationen nur sehr beschränkt zugänglich. So z. B. für nicht zeitkritische Applikationen wie etwa Spiele oder Officeanwendungen.

Mit dem Begriff "zusätzliches Softwaremodul" ist insbesondere ein gerätesoftwarefremdes Softwaremodul gemeint, d. h. ein zusätzliches Softwaremodul, das im Allgemeinen nicht zu der vom Hersteller mit dem Kommunikationsgerät gelieferten Gerätesoftware gehört. Allerdings ist nicht auszuschliessen, dass ein Hersteller ein solches Softwaremodul mit einer extern zugänglichen Schnittstelle zum Abgreifen der Videodaten gemäss Anspruch 1 in Zukunft gleich in die Gerätesoftware integriert und dieses somit als Teil der Gerätesoftware angesehen werden muss. Auch ein derartig ausgebildetes Kommunikationsgerät bzw. Übertragungsverfahren ist im Sinne der vorliegenden Erfindung und soll von den Ansprüchen umfasst sein.

Durch die Erfindung wird es möglich, bei der Videotelefonie auf die zwischen den Kommunikationsteilnehmern übermittelten Videodaten direkt zuzugreifen, beispielsweise die empfangenen Videodaten quasi abzuhören, und nach Belieben weiter zu verarbeiten. Sie können beispielsweise in einem internen Speicher des Mobilfunktelefons oder in einem beliebigen anderen Speicher abgespeichert werden. Sie können beispielsweise aber auch an andere Geräte zur Weiterverarbeitung übermittelt werden. Die Erfindung erlaubt es beispielsweise aber auch, die zu sendenden Videodaten vor dem Senden zu manipulieren, d. h. die von der Kamera des Kommunikationsgeräts des Senders erzeugten Videodaten zu verändern oder sie teilweise oder vollständig durch anderweitig erzeugte Videodaten zu ersetzen, sodass die gesendeten Videodaten besser oder sogar vollständig bekannt sind. Diese anderweitigen, externen Videodaten können zu diesem Zweck beispielsweise auf einem internen oder auf einem anderen, von der Gerätesoftware aus zugänglichen Speicher abgespeichert und von dort in den Sendepfad eingespiesen werden.

Die Erfindung bietet somit eine einfache, elegante, innovative und kostengünstige Lösung, um die bei der Videotelefonie übertragenen Videodaten einer automatischen, d. h. möglichst objektiven Qualitätsbeurteilung zugänglich zu machen. Gleichzeitig werden der Datenfluss im Mobiltelefon und das Verhalten des Mobiltelefons nicht verändert.

Es wird auch keine zusätzliche Hardware benötigt, die Erfindung lässt sich sehr einfach in ein bestehendes Mobiltelefon integrieren. D. h. es lassen sich nicht nur neue Kommunikationsgeräte und damit neue Mess- bzw. Testsysteme mit der Erfindung ausstatten, auch bestehende Kommunikationsgeräte, Mess- und Testsysteme lassen sich einfach und kostengünstig nachrüsten.

Um die Qualität der beim Empfänger empfangenen Videodaten beurteilen zu können, muss man zunächst wissen, wie die ursprünglich gesendeten Videodaten ausgesehen haben.

Die zu sendenden Videodaten werden normalerweise von der in das Kommunikationsgerät integrierten Kamera erzeugt. Diese werden nachfolgend als interne Videodaten bezeichnet. Diese internen Videodaten werden dann mit der Übertragungssoftware verarbeitet, wobei sie nun bei Ihrer Übertragung zwischen dem ersten und dem zweiten Modul der Übertragungssoftware vorzugsweise modifiziert werden. Dies geschieht, indem mit dem zusätzlichen Softwaremodul die vom ersten Modul übertragenen, internen Videodaten detektiert, modifiziert und dann mit dem zusätzlichen Softwaremodul die modifizierten Videodaten zum zweiten Modul übertragen werden. Auf diese Weise wird es möglich, die zu sendenden Videodaten in einer gewünschten Art und Weise, mehr oder weniger zu verändern, sodass einige der Eigenschaften der gesendeten Videodaten bekannt sind und beim Vergleich mit den empfängerseitig empfangenen Videodaten berücksichtigt werden können.

Mit Vorteil werden die internen Videodaten jedoch nicht einfach nur modifiziert, sondern sie werden bei ihrer Übertragung zwischen dem ersten und dem zweiten Modul teilweise oder vollständig durch externe Videodaten ersetzt. Dies geschieht, indem mit dem zusätzlichen Softwaremodul anstelle der internen Videodaten die externen Videodaten zum zweiten Modul übertragen werden. Dadurch sind im Gegensatz zur vorhin erwähnten Möglichkeit der Modifikation der Videodaten nicht nur einige wenige Eigenschaften der zu sendenden Videodaten bekannt, sondern man kann gewissermassen jeden einzelnen Bildpunkt und mithin praktisch alle Eigenschaften der zu sendenden Daten präzise vorgeben. D. h. man kann Testdaten bereitstellen, die als externe Videodaten anstelle der internen, von der Kamera erzeugten Videodaten versendet werden. Die beim Empfänger empfangenen Videodaten können dann mit diesen Testdaten verglichen werden und da die Eigenschaften de Testdaten vollständig bekannt sind ist eine optimale Quatitätsbeurteilung der empfangenen Videodaten möglich.

Diese Testdaten, d. h. die externen Videodaten werden hierbei vorzugsweise nicht mit dem Kommunikationsgerät selber, sondern mit einem anderen, vom Kommunikationsgerät verschiedenen Gerät erzeugt, sodass die Eigenschaften der Testdaten möglichst präzise gesteuert werden können.

Mit Vorteil werden diese Testdaten zuvor in einen Speicher des Kommunikationsgeräts abgespeichert, wo sie dann beliebig oft zur Übertragung an einen Empfänger verwendet werden können, um bei verschiedenen Messungen möglichst gleich bleibende, reproduzierbare Bedingungen zu erreichen.

Das Ersetzen bzw. Modifizieren der Daten kann im Prinzip zwischen zwei beliebigen Modulen der Übertragungssoftware erfolgen. Will man beispielsweise lediglich die Qualität der Übertragungsstrecke beurteilen, wird man zwei Module wählen, die möglichst weit hinten im Sendepfad des sendenden Kommunikationsgeräts, d. h. möglichst nahe bei der Antenne des Kommunikationsgeräts liegen. Dadurch haben die davor liegenden Merkmale keinen Einfluss beim Vergleich der empfangenen Videodaten mit den modifizierten internen oder den externen Videodaten. Um eine möglichst benutzernahe Qualitätsbeurteilung durchführen zu können, möchte man jedoch typischerweise auch den Einfluss des Kommunikationsgeräts auf die Qualität der empfangenen Videodaten berücksichtigen. In diesem Fall wird man also die internen Videodaten möglichst nahe beim Benutzer, d. h. möglichst nahe bei der Kamera modifizieren oder ersetzen. Um dies zu erreichen, werden die internen Videodaten in einer bevorzugten Ausführungsvariante der Erfindung gleich nach deren Erzeugung durch die Kamera des Kommunikationsgeräts ersetzt. D. h. die von der Kamera erzeugten Videodaten werden entweder gar nicht in den Bildspeicher der Kamera geschrieben oder dort gleich durch die externen Videodaten ersetzt, indem die externen Videodaten anstelle der internen Videodaten in den Bildspeicher der integrierten Kamera geschrieben werden. Auf diese Weise kann der gesamte Sendepfad hinter der Kamera in die Qualitätsbeurteilung einbezogen werden. Dies erlaubt eine Qualitätsbeurteilung, die sehr nahe an der Wahrnehmung eines Benutzers liegt.

Um das Verhalten des Kommunikationsgeräts möglichst nicht zu verändern und um eine möglichst optimale Qualitätsbeurteilung zu erreichen, sollen bei der Übertragung der externen Videodaten zum zweiten Modul, d. h. beim Ersetzen der internen Videodaten durch die externen Videodaten, mit Vorteil möglichst viele der nachfolgenden Bedingungen erfüllt werden:

Die externen Videodaten sollen
a) synchron zu den internen Videodaten,
b) ohne Bildverluste,
c) ohne Bilddatenfehler,
d) in einem gleichen Bildformat wie die internen Videodaten und
e) mit einer gleichen Codierung wie die internen Videodaten
zum zweiten Modul übertragen werden. Weiter soll die Original-Gerätesoftware des Kommunikationsgeräts nicht verändert werden.

Empfängerseitig werden die mit der Antenne des Kommunikationsgeräts empfangenen Videodaten mit der Übertragungssoftware typischerweise zum Display oder einer anderen Anzeigevorrichtung des Kommunikationsgeräts übertragen und in Echtzeit dargestellt. Um die empfangenen Videodaten einer Qualitätsbeurteilung unterziehen zu können, wird nun auf die empfangenen Videodaten zugegriffen, indem die empfangenen Videodaten vorzugsweise mit dem zusätzlichen Softwaremodul detektiert und für eine weitere Verarbeitung bereitgestellt werden. Auf diese Weise ist es möglich, auf die empfängerseitig tatsächlich empfangenen Videodaten zuzugreifen und sie mit den senderseitig gesendeten Testdaten (oder den modifizierten internen Videodaten) zu vergleichen.

Um auch beim Empfang der Videodaten das Verhalten des Kommunikationsgeräts möglichst nicht zu verändern und um eine möglichst optimale Qualitätsbeurteilung zu erreichen, sollen beim Detektieren der empfangenen Videodaten mit Vorteil möglichst viele der nachfolgenden Bedingungen erfüllt werden:

Die empfangenen Videodaten sollen
f) synchron zur Bildfrequenz der empfangenen Videodaten,
g) ohne Bildverluste,
h) ohne Bilddatenfehler,
i) in einem gleichen Bildformat wie die empfangenen Videodaten und
j) mit einer gleichen Codierung wie die empfangenen Videodaten detektiert werden.

Weiter soll das empfangene Videosignal nicht nur detektiert, sondern bevorzugt auch auf der Anzeigevorrichtung des Kommunikationsgeräts dargestellt werden. Zudem soll auch in diesem Fall die Original-Gerätesoftware des Kommunikationsgeräts nicht verändert werden.

Auch in Empfangsrichtung gilt, dass die empfangenen Videodaten prinzipiell irgendwo auf ihrem Empfangspfad von der Antenne zum Display abgegriffen werden können, dass sie aber, im Sinne einer möglichst benutzernahen Qualitätsbeurteilung, vorzugsweise möglichst nahe beim Display abgegriffen werden. Dies geschieht beispielsweise, indem sie mit dem zusätzlichen Softwaremodul aus einem Bildspeicher der Anzeigevorrichtung ausgelesen werden.

Um die empfangenen Videodaten mit den senderseitig gesendeten Testdaten (oder den modifizierten internen Videodaten) vergleichen zu können, werden die mit dem zusätzlichen Softwaremodul abgegriffenen, d. h. detektierten Videodaten bevorzugt auf einem Speicher abgespeichert oder zur weiteren Verarbeitung bereitgestellt oder hierfür an ein externes Gerät weitergeleitet.

Bei dem Speicher kann es sich sowohl um einen internen (flüchtigen oder auch nicht flüchtigen) Speicher des Kommunikationsgerät, als auch um einen externen, jedoch von der Gerätesoftware des Kommunikationssystems aus zugreifbaren, Speicher handeln. Unter dieser Definition werden auch beliebige Speichermedien wie beispielsweise Speicherkarten (wie etwa so genannte Multimedia Memory Cards - MMC) verstanden, die mit einer entsprechenden Schnittstelle des Kommunikationsgeräts (kabelgebunden oder auch kabellos) verbunden werden können.

Dadurch wird es möglich, die Qualitätsbeurteilung mehrfach unter gleich bleibenden Bedingungen, jedoch beispielsweise mit unterschiedlichen Beurteilungsalgorithmen zu wiederholen.

Um das zusätzliche Softwaremodul zwischen das erste und das zweite Modul der Übertragungssoftware zu schalten, wird in einer bevorzugten Ausführungsform der Erfindung die Reihenfolge der Softwaremodule, die beim Einschalten eines derartigen Kommunikationsgeräts in den Arbeitsspeicher des Kommunikationsgeräts geladen werden, verändert. Und zwar wird diese Reihenfolge derart verändert, dass das zusätzliche Softwaremodul zwischen den beiden Modulen der Übertragungssoftware geladen wird.

Der Begriff Arbeitsspeicher umfasst in diesem Zusammenhang sämtliche Speicher des Kommunikationsgerätes, in welchen Softwaremodule geladen werden bzw. bereits gespeichert oder geladen sind, um sie bei der Echtzeitübertragung der Videodaten von dort her auszuführen. D. h. der Arbeitsspeicher umfasst nicht nur den als RAM (Random Access Memory) bezeichneten Speicher, welcher typischerweise ein wiederbeschreibbarer, flüchtiger Speicher mit kurzen Zugriffszeiten ist. Sondern der Arbeitsspeicher umfasst auch den als ROM (Read Only Memory) bezeichneten Speicher, der typischerweise als nicht flüchtiger Speicher mit kurzen Zugriffszeiten ausgebildet ist, und auf den nur lesend zugegriffen werden kann, wenn die Daten einmal hineingeschrieben worden sind. In einem solchen ROM Speicher werden häufig einzelne Module der Gerätesoftware (inkl. der Übertragungssoftware) abgelegt, wobei diese Module dann direkt aus dem ROM heraus ausgeführt werden. Entsprechend soll auch ein in einem ROM gespeichertes Softwaremodul als "in den Arbeitsspeicher" zu ladendes Modul angesehen werden, selbst wenn es nicht in einen RAM Speicher geladen, sondern direkt aus dem ROM heraus ausgeführt wird.

Diese Reihenfolge beim Laden der verschiedenen Softwaremodule wird typischerweise vorgegeben, indem ein Modul auf das nachfolgend zu ladende Modul referenziert. Zu diesem Zweck enthält das vorgängig geladene Modul einen Verweis auf das nachfolgend zu ladende Modul. Dies gilt auch für die Module der Übertragungssoftware.

Diese Reihenfolge wird nun bevorzugt verändert, indem eine Kopie von einem der beiden Module (z. B. dem Modul A wobei das Modul A sowohl das erste, als auch das zweite Modul sein kann) der Übertragungssoftware erstellt und auf einem nicht flüchtigen Speicher des Kommunikationsgeräts abgespeichert wird. Der Verweis in dieser Kopie wird nun derart modifiziert, dass er nicht mehr auf das andere Modul (z. B. Modul B) der Übertragungssoftware, sondern auf das zusätzliche Softwaremodul referenziert, das ebenfalls auf einem nicht flüchtigen Speicher des Kommunikationsgeräts abgespeichert wird. Das zusätzliche Softwaremodul enthält schliesslich einen Verweis, der auf dieses andere Modul B der Übertragungssoftware referenziert. Wird nun beim Einschalten des Kommunikationsgeräts dafür gesorgt, dass statt des Moduls A dessen Kopie geladen wird, wird danach folglich das zusätzliche Softwaremodul und nach diesem schliesslich das Modul B geladen.

Grundsätzlich gibt es verschiedene mögliche Formate, in welchen die Softwaremodule des Kommunikationsgeräts realisiert werden können, wobei das Format vom jeweiligen Kommunikationsgerät bzw. der darauf installierten Gerätesoftware abhängt. Ein häufig verwendetes und folglich bevorzugtes Format für die verschiedenen Softwaremodule der Gerätesoftware des Kommunikationsgeräts und damit auch der Module der Übertragungssoftware ist das DLL (Dynamic Link Library) Format. D. h. die einzelnen Module sind DLL Dateien, die auf einem nicht flüchtigen Speicher des Kommunikationsgeräts gespeichert sind. Beim Einschalten des Kommunikationsgeräts werden dann diese DLL Dateien in der gewünschten Reihenfolge in den Arbeitsspeicher des Kommunikationsgeräts geladen.

Falls es die technischen Möglichkeiten erlauben, spricht eigentlich nichts dagegen, die Videodaten mit einer Bildrate von über 25 Bildern pro Sekunde zu übertragen. Auf der anderen Seite reicht bei bestimmten Anwendungen eventuell auch eine Bildrate von unter 1 Bild pro Sekunde. Bei einer bevorzugten Ausführungsform der Erfindung bewegt sich die Bildrate jedoch irgendwo zwischen 1 und 25 Bildern pro Sekunde und ist in diesem Bereich frei wählbar. In einer besonders bevorzugten Ausführungsform der Erfindung werden die Videodaten mit einer Bildrate zwischen 8 und 15 Bildern pro Sekunde übertragen.

Für die Übertragung der Videodaten zwischen den Kommunikationsteilnehmern kann je nach der gewünschten Anwendung ein Übertragungskanal mit der für diese Anwendung benötigten Übertragungsrate zwischen einigen-Ki+obit und-einigen-Megabit pro-Sekunde verwendet werden. Hierbei kann es sich auch um einen paketvermittelten Übertragungskanal handeln. Vorzugsweise werden die Videodaten allerdings über einen leitungsvermittelten Trägerkanal mit einer Übertragungsrate von 64 Kilobit pro Sekunde übertragen.

Die Erfindung wird insbesondere in Mobilfunknetzen nach einem Mobilfunkstandard der dritten Generation eingesetzt, wobei es sich bevorzugt um ein UMTS Mobilfunknetz handelt. Grundsätzlich spricht jedoch nichts dagegen, die Erfindung auch in anderen drahtlosen Kommunikationsnetzen wie etwa einem GSM (Global System for Mobile Communication), einem WLAN (Wireless Local Area Network) oder in einem anderen Funknetz zu verwenden.

Die Lösung der Aufgabe ist weiter durch die Merkmale des Anspruchs 15 definiert. Gemäss der Erfindung ist ein zusätzliches Softwaremodul mit einer wie bereits vorgängig beschriebenen, externen, von aussen zugänglichen Schnittstelle in einem typischerweise nicht flüchtigen Speicher des Kommunikationsgerätes gespeichert. Dieses zusätzliche Softwaremodul ist nun beim Einschaltvorgang des Kommunikationsgerätes in dessen Arbeitsspeicher ladbar, sodass die Videodaten bei der Echtzeitübertragung zwischen dem ersten und dem zweiten Modul mit dem zusätzlichen Softwaremodul verarbeitbar und über die externe Schnittstelle des zusätzlichen Softwaremoduls zugreifbar sind.

Die Beurteilung der Übertragungsqualität der Videodaten bei deren Echtzeitübertragung zwischen zwei Kommunikationsgeräten erfolgt mit einer Testvorrichtung nach Anspruch 16. Erfindungsgemäss muss bei dieser Testvorrichtung zumindest eines der Kommunikationsgeräte (das "erste" Gerät) in der vorgängig beschriebenen Art und Weise ausgebildet sein. Das andere Kommunikationsgerät (das "zweite" Gerät) kann dann sowohl ebenfalls erfindungsgemäss ausgebildet sein, oder es kann beispielsweise auch ein Computer mit entsprechender Ausstattung (wie eingangs beschrieben) sein. In beiden Fällen lassen sich zwischen dem ersten Gerät und dem Computer bzw. dem zweiten Gerät wie beschrieben vordefinierte Testdaten übertragen, die dann empfängerseitig abgegriffen, abgespeichert und in Kenntnis der gesendeten Testdaten analysiert werden können, um auf diese Weise die Qualitätsbeurteilung vornehmen zu können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Blockdiagramms eines Mobilfunktelefons gemäss der Erfindung;
- Fig. 2: die hierarchische Struktur einiger, relevanter Softwaremodule des Mobilfunktelefons aus Fig. 1 und
- Fig. 3: die beim Zugriff auf die Videodaten beim Empfangen bzw. Senden der Videodaten beteiligten Softwaremodule.

Grundsätzlich sind in den Figuren gleiche Teile mit gleichen Bezugszeichen versehen.

### Wege zur Ausführung der Erfindung

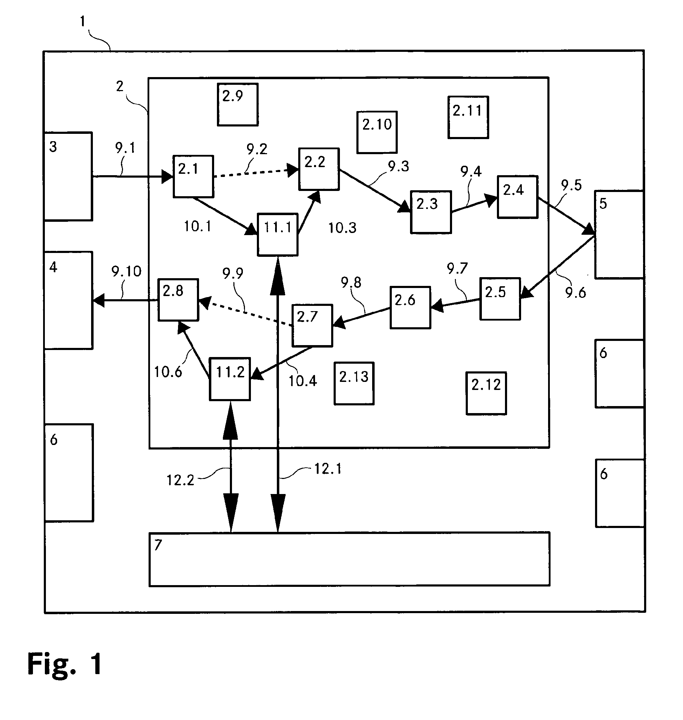

Figur 1 zeigt ein schematisch dargestelltes Blockdiagramm eines Mobilfunktelefons 1 mit einer Betriebssystemsoftware 2. Das Mobilfunktelefon 1 umfasst weiter eine integrierte Kamera 3, ein Display 4, eine Sende-/Empfangsvorrichtung 5 sowie allfällige weitere Schnittstellen 6, welche von der Betriebssystemsoftware 2 aus ansteuerbar sind. Die entsprechenden Schnittstellen sind jedoch nicht offen. D. h. die über die Schnittstellen zur Kamera 3, zum Display 4, zur Sende-/Empfangsvorrichtung 5 sowie zu den weiteren Schnittstellen 6 übertragenen Daten sind von aussen, d. h. von ausserhalb der Betriebssystemsoftware aus nicht zugreifbar. Die Betriebssystemsoftware 2 umfasst eine Mehrzahl von Softwaremodulen 2.1 -2.13. Einige davon, in diesem Beispiel zumindest die Softwaremodule 2.1 - 2.8, sind Teil der für die Videotelefonie notwendigen Videotelefonie Applikationssoftware, welche in die Betriebssystemsoftware 2 integriert ist. D. h. die Module der Applikationssoftware werden für die Verarbeitung der bei der Videotelefonie zwischen den Kommunikationsteilnehmern übertragenen Videodaten benötigt und sind in die Betriebssystemsoftware 2 eingekapselt.

Bei einem Mobilfunktelefon gemäss dem bekannten Stand der Technik gibt es folglich keine Möglichkeit, auf die bei der Nutzung des Videotelefonie-Services mit dem Mobilfunktelefon 1 zwischen den Kommunikationsteilnehmern übertragenen Videodaten zuzugreifen, damit die Videodaten auf ihre Qualität hin überprüft werden können.

Die Softwaremodule 2.1 - 2.8 der Applikationssoftware sind zumindest teilweise hierarchisch geordnet, d. h. sie werden beim Einschalten des Mobilfunktelefons in einer bestimmten Reihenfolge in den Arbeitsspeicher (nicht dargestellt) des Mobilfunktelefons geladen. In dem dargestellten Mobilfunktelefon 1 werden beispielsweise die Softwaremodule 2.1 bis 2.4 in der umgekehrten Reihenfolge ihrer Nummerierung und die Softwaremodule 2.5 bis 2.8 in der Reihenfolge ihrer Nummerierung geladen, wobei es unerheblich ist, ob die Softwaremodule 2.1 bis 2.4 vor den Softwaremodulen 2.5 bis 2.8 oder umgekehrt geladen werden. Bei der Echtzeitübertragung der Videodaten werden diese dann typischerweise auch in einer bestimmten Reihenfolge von den einzelnen Softwaremodulen verarbeitet. Beim Senden werden die Videodaten beispielsweise von den Softwaremodulen 2.1 bis 2.5 in der durch die Pfeile 9.1, 9.2, 9.3, 9.4 und 9.5 definierten Reihenfolge verarbeitet, d. h. in der umgekehrten Reihenfolge, wie sie geladen werden. Beim Empfangen stimmt hingegen die Reihenfolge beim Laden der Module 2.5 bis 2.8 mit der durch die Pfeile 9.6, 9.7, 9.7, 9.9 und 9.10 definierten Reihenfolge bei der Verarbeitung der Videodaten überein. Die Pfeile 9.1 - 9.10 in Figur 1 geben also die Richtung des Datenflusses bei der Verarbeitung der Videodaten an.

Beim Senden umfasst die Verarbeitung der Videodaten beispielsweise eine Komprimierung, eine Codierung, eine Verschlüsselung eine Modulierung der von der Kamera 3 erzeugten und zu versendenden Videodaten oder andere Bearbeitungsschritte. Die derart aufbereiteten Videodaten werden schliesslich von der Sende-/Empfangsvorrichtung ausgestrahlt. Beim Empfangen der Videodaten umfasst die Verarbeitung beispielsweise eine Dekomprimierung, eine Decodierung, eine Entschlüsselung, eine Demodulierung der empfangenen Videodaten oder andere Bearbeitungsschritte.

Erfindungsgemäss wird nun die Reihenfolge der beim Einschalten des Mobilfunktelefons 1 in dessen Arbeitsspeicher geladenen Softwaremodule modifiziert. D. h. das Mobilfunktelefon wird derart modifiziert, dass nach dem Softwaremodul 2.2 nicht das Softwaremodul 2.1, sondern ein zusätzliches Softwaremodul 11.1 in den Arbeitsspeicher des Mobilfunktelefons geladen wird. Erst nach diesem zusätzlichen Softwaremodul 11.1 wird dann das Softwaremodul 2.1 geladen. Danach geht es in der vorgegebenen Reihenfolge weiter. Indem die Reihenfolge beim Laden der Module verändert wird, wird auch die Reihenfolge beim Verarbeiten der Videodaten während der Echtzeitübertragung verändert. D. h. die Videodaten werden zunächst mit dem Softwaremodul 2.1, danach mit dem zusätzlichen Softwaremodul 11.1 und schliesslich mit dem Softwaremodul 2.2 verarbeitet. Diese neue Reihenfolge ist durch die beiden Pfeile 10.1 und 10.3 dargestellt, wobei der Pfeil 9.2, der die ursprüngliche Reihenfolge definiert, quasi ausser Kraft gesetzt und daher gestrichelt dargestellt ist.

Auch die Reihenfolge beim Laden der Softwaremodule 2.7 und 2.8 wird modifiziert. Nach dem Softwaremodul 2.7 wird nicht das Softwaremodul 2.8, sondern ein zusätzliches Softwaremodul 11.2. in den Arbeitsspeicher des Mobilfunktelefons 1 geladen. Erst nach diesem zusätzlichen Softwaremodul 11.2 wird dann das Softwaremodul 2.8 geladen. Die Module davor werden in der üblichen Reihenfolge geladen. Damit werden die Videodaten beim Empfangen auch in dieser neuen Reihenfolge verarbeitet. Diese neue Reihenfolge ist durch die beiden Pfeile 10.4 und 10.6 dargestellt, wobei der Pfeil 9.9, der die ursprüngliche Reihenfolge definiert, quasi ausser Kraft gesetzt und daher gestrichelt dargestellt ist.

Die beiden zusätzlichen Softwaremodule 11.1 und 11.2 umfassen nun eine zusätzliche, durch die beiden Pfeile 12.1, 12.2 dargestellte Schnittstelle, über welche auf die zwischen den Softwaremodulen 2.1 und 2.2 bzw. 2.7 und 2.8 übertragenen Videodaten zugegriffen werden kann. Das Mobilfunktelefon 1 umfasst beispielsweise einen nicht flüchtigen Speicher 7, auf welchem die empfangenen Videodaten abgespeichert werden können. Beim Senden der Videodaten können nun mit Hilfe des zusätzlichen Softwaremoduls 11.1 anstelle der von der Kamera 3 erzeugten Videodaten auch externe, auf dem Speicher 7 gespeicherte Videodaten, zum Softwaremodul 2.2 übertragen und schliesslich mit der Sende-/Empfangsvorrichtung 5 ausgestrahlt werden.

Bei dem Speicher 7 kann es sich sowohl um einen fest in das Mobilfunktelefon 1 integrierten Speicher (z. B. eine Festplatte, einen Flash-Speicher oder einen anderen, nicht flüchtigen Speicher), als auch um einen bei Bedarf wahlweise an das Mobilfunktelefon 1 anschliessbaren Speicher 7 (z. B. eine externe Speicherkarte, eine über eine USB (Universal Serial Bus) Schnittstelle anschliessbare Festplatte oder einen anderen externen, nicht flüchtiger Speicher) handeln. Dieser Speicher 7 ist typischerweise auch für andere Zwecke, wie beispielsweise zur Speicherung von beliebigen Daten des Benutzers oder auch zur Speicherung von Daten und/oder Programmen, die für den Betrieb des Mobilfunktelefons 1 benötigt werden, vorgesehen.

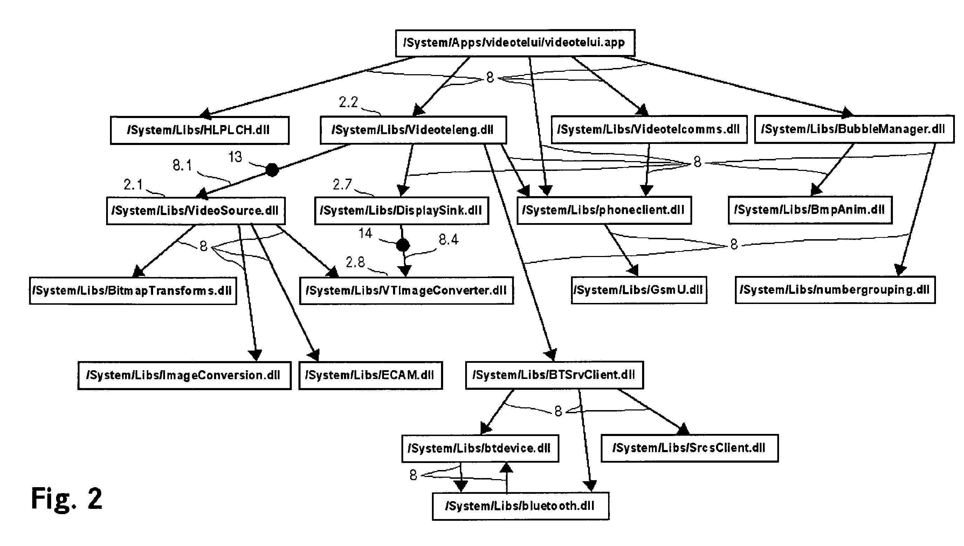

In Figur 2 sind einige der für die Videotelefonie relevanten Softwaremodule des bekannten und weit verbreiteten Mobilfunktelefon-Betriebssystems Symbian dargestellt, wobei hier die Pfeile 8, 8.1 und 8.4, die die einzelnen Module miteinander verbinden, im Gegensatz zur Figur 1 die Reihenfolge angeben, in welcher die jeweiligen, aufeinander folgenden Module geladen werden. Bei anderen Betriebssystemen für Mobilfunktelefone oder andere Kommunikationsgeräte für funkbasierte Telekommunikation sind ähnliche Strukturen anzutreffen und die Erfindung folglich in ähnlicher Weise zu implementieren wie hier im Zusammenhang mit dem Symbian-Betriebssystem beschrieben.

Die einzelnen Softwaremodule sind als Programmdateien im DLL Format auf einem der internen Speicher des Mobilfunktelefons gespeichert und werden beim Einschalten des Mobilfunktelefons in der dargestellten Reihenfolge in dessen Arbeitsspeicher geladen. Zu diesem Zweck umfasst jedes dieser Softwaremodule einen Verweis, d. h. einen Link auf das nachfolgende Softwaremodul. Dieser Link umfasst beispielsweise den Dateinamen sowie eine UID (Unique Identification Number wie z. B. 0x10001234). Anhand dieses Links wird die Reihenfolge festgelegt, wie die einzelnen Softwaremodule beim Einschalten des Mobilfunktelefons 1 in dessen Arbeitsspeicher geladen werden.

Wie bereits erwähnt, läuft der Datenfluss beim Senden bei dem in Fig. 2 dargestellten Beispiel von unten nach oben. D. h. die Videodaten werden zunächst vom Softwaremodul 2.1 "VideoSource.dll" (gespeichert in "/System/Libs/") und erst danach vom Softwaremodul 2.2 "Videoteleng.dll" (ebenfalls in "/System/Libs/" gespeichert) verarbeitet. Geladen werden diese beiden Softwaremodule 2.1, 2.2 jedoch in der Reihenfolge gemäss Pfeil 8.1. Zwischen diesen beiden Modulen befindet sich der Einspeispunkt 13, wo die eigenen, externen Videodaten anstelle der von der Kamera erzeugten Videodaten in den Sendepfad eingespiesen werden. Vereinfacht ausgedrückt kann man sagen, dass das Modul "Video-Source.dll" die von der Kamera 3 erzeugten Videodaten quasi in einen Bildspeicher/Bildpuffer der Kamera schreibt bzw. den Zeitpunkt und die Adresse liefert, wann und wohin diese Videodaten der Kamera gespeichert worden sind und das Modul "Videoteleng.dll" die Videodaten zur Weiterverarbeitung wieder aus diesem Puffer ausliest. Durch Überwachung des entsprechenden Triggerpunktes, d. h. des Einspeispunktes 13, können dann mit dem zusätzlichen Softwaremodul 11.1, unter Ausnützung dieser Informationen, die von der Kamera erzeugten Videodaten synchron durch die externen Videodaten ersetzt werden, indem die externen Videodaten an die entsprechende Adresse in dem Bildspeicher der Kamera hineingeschrieben werden.

In Empfangsrichtung sind die Softwaremodule 2.7 und 2.8 in diesem Beispiel die beiden Module "DisplaySink.dll" und "VTImageConverter.dll" (beide ebenfalls in "/System/Libs/" gespeichert), welche sowohl in dieser Reihenfolge gemäss Pfeil 8.4 geladen, als auch beim Empfangen der Videodaten in dieser Reihenfolge durchlaufen werden. Zwischen diesen beiden Modulen befindet sich der Abgriffpunkt 14, wo die empfangenen Videodaten aus dem Empfangspfad abgegriffen und beispielsweise im Speicher 7 (wie in Fig. 1 ersichtlich) gespeichert werden. Vereinfacht ausgedrückt kann man sagen, dass das Modul "Display-Sink.dll" die empfangenen Videodaten quasi in einen Bildspeicher/Bildpuffer schreibt bzw. den Zeitpunkt und die Adresse liefert, wann und wohin die empfangenen Videodaten gespeichert worden sind und das Modul "VTImageConverter.dll" diese Videodaten zur Weiterverarbeitung wieder aus diesem Puffer ausliest. Durch Überwachung des entsprechenden Triggerpunktes, d. h. des Abgriffpunktes 14, können dann mit dem zusätzlichen Softwaremodul 11.2, unter Ausnützung dieser Informationen, die empfangenen Videodaten synchron aus dem Bildpuffer ausgelesen und auf dem Speicher 7 zwischengespeichert werden.

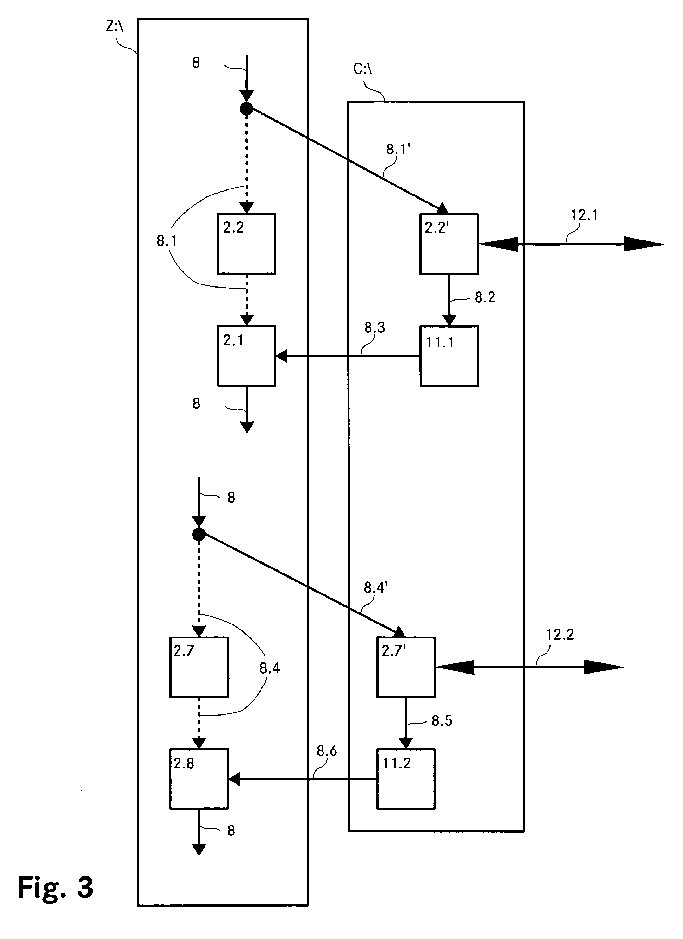

Figur 3 zeigt in einer schematischen Darstellung, wie die beiden zusätzlichen Softwaremodule 11.1, 11.2 beim Laden in den Arbeitsspeicher des Kommunikationsgeräts 1 jeweils zwischen die beiden en Softwaremodule 2.1 und 2.2 bzw. 2.7 und 2.8 geschaltet werden.

Das Mobilfunktelefon 1 umfasst zwei verschiedene, nicht flüchtige Speicher Z:\ und C:\, wobei diese Bezeichnungen gleichzeitig auch die Laufwerksbezeichnungen dieser beiden Speicher sind, über welche sie vom Betriebssystem aus angesprochen werden können. Der Speicher Z:\ ist beispielsweise ein Nur-Lese-Speicher (ROM - Read Only Memory) und der Speicher C:\ ein Lese-und-Schreib-Speicher (RW - Read and Write). Im ROM Speicher Z:\ sind typischerweise betriebssystemeigene Daten und Softwaremodule, hier beispielsweise und unter anderem die Softwaremodule 2.2 "Videoteleng.dll", 2.1 "VideoSource.dll", 2.7 "DisplaySink.dll" und 2.8 "VTImageConverter.dll" gespeichert. Auf dem Laufwerk C:\ können beliebige andere Daten wie beispielsweise benutzergenerierte Daten (Kalenderdaten, Musik, Fotos etc.), aber auch weitere Daten des Betriebssystems oder sonstige, für den Betrieb des Mobilfunktelefons benötigte Daten gespeichert sein.

Auf dem Speicher C:\ wird das neue, zusätzliche Softwaremodul 11.1 - hier als DLL Datei mit z. B. dem Namen "Videosour_0.dll" gespeichert. Weiter wird auf diesem Speicher C:\ eine Kopie 2.2' des original Softwaremoduls 2.2 "Videoteleng.dll" mit demselben Namen "Videoteleng.dll" gespeichert. Diese Kopie 2.2' ist nun leicht modifiziert, sodass der Link nicht mehr wie bei dem auf dem Speicher Z:\ abgelegten original Softwaremodul 2.2 "Videoteleng.dll" auf das Softwaremodul 2.1 "Videosource.dll", sondern auf das auf dem Speicher C:\ abgelegte, zusätzliche Softwaremodul 11.1 "Videosour_0.dll" verweist. Der Link des zusätzlichen Softwaremoduls 11.1 wiederum verweist auf das originale Softwaremodul 2.1 "Videosource.dll", welches auf dem Laufwerk Z:\ abgelegt ist.

In analoger Weise wird auf dem Speicher C:\ das neue, zusätzliche Softwaremodul 11.2 - hier als DLL Datei mit z. B. dem Namen "VTImageConvert_0.dll" gespeichert. Weiter wird auf dem Speicher C:\ eine Kopie 2.7' des original Softwaremoduls 2.7 "DisplaySink.dll" mit demselben Namen "DisplaySink.dll" gespeichert. Diese Kopie 2.7' ist nun leicht modifiziert, sodass der Link nicht mehr wie bei der auf dem Speicher Z:\ abgelegten Originaldatei "DisplaySink.dll" auf das Softwaremodul 2.8 "VTImageConverter.dll", sondern auf das auf dem Speicher C:\ abgelegte, zusätzliche Softwaremodul 11.2 "VTImageConvert_O.dll" verweist. Der Link des zusätzlichen Softwaremoduls 11.2 wiederum verweist auf das original Softwaremodul 2.8 "VTImageConverter.dll", welches auf dem Laufwerk Z:\ abgelegt ist.

Das Betriebssystem des Mobilfunktelefons 1 ist nun derart beschaffen, dass es beim Bootvorgang, d. h. beim Einschalten des Mobilfunktelefons, die einzelnen Speicher des Mobilfunktelefons in einer bestimmten Reihenfolge durchsucht. Soll ein bestimmtes Softwaremodul geladen werden, sucht das Betriebssystem zunächst auf dem Speicher C:\ nach der entsprechenden DLL Datei. Wird diese Datei auf dem Laufwerk C:\ nicht gefunden, wird auf dem Laufwerk Z:\ nach dieser DLL Datei gesucht, wobei davor, dazwischen oder danach auch noch andere Speicher durchsucht werden können.

D. h. wenn beim Bootvorgang das Softwaremodul 2.2 "Videoteleng.dll" in den Arbeitsspeicher geladen werden soll, wird dieses Modul zunächst im Speicher C:\ gesucht. Während dieses Softwaremodul bei einem Mobiltelefon nach dem Stand der Technik mit dem Betriebssystem Symbian auf dem Laufwerk C:\ nicht gefunden wird, wird dieses Softwaremodul bei einem Mobilfunktelefon gemäss der Erfindung auch tatsächlich gefunden, nämlich die dort zuvor gespeicherte Kopie 2.2', welche denselben Namen wie die original DLL Datei "Videoteleng.dll" hat und gemäss Pfeil 8.1' vom Betriebssystem geladen wird. Danach wir gemäss dem Link in dieser Kopie 2.2' das zusätzliche Softwaremodul 11.1 "Videosour_0.dll" geladen, welches ebenfalls im Speicher C:\ abgelegt ist. Das zusätzliche Softwaremodul 11.1 enthält schliesslich einen Link auf das original Softwaremodul 2.1 "VideoSource.dll" (welches auf dem Laufwerk Z:\ abgelegt ist), welches dann im Anschluss an das zusätzliche Softwaremodul 11.1 geladen wird.

Entsprechend wird beim Bootvorgang gemäss Pfeil 8.4' nicht das original Softwaremodul 2.7 vom Laufwerk Z:\, sondern dessen auf dem Laufwerk C:\ gespeicherte Kopie 2.7' mit demselben Namen "DisplaySink.dll" geladen. Der Link in der Kopie 2.7' zeigt auf das zusätzliche Softwaremodul 11.2 auf Laufwerk C:\, welches in diesem Fall z. B. "VTImageConvert_0.dll" heisst. Nach dem Laden dieser Kopie 2.7' wird dann schliesslich gemäss dem Link im zusätzlichen Softwaremodul 11.2 das original Softwaremodul 2.8 "VTImageConverter.dll" vom Laufwerk Z:\ geladen.

Die Reihenfolge, in welcher diese Softwaremodule 2.2', 11.1 und 2.1 bzw. 2.7', 11.2 und 2.8 geladen werden, ist durch die Pfeile 8.1', 8.2 und 8.3 bzw. 8.4', 8.5 und 8.6 dargestellt. Die ursprüngliche Reihenfolge ist durch die Pfeile 8.1 bzw. 8.4 angegeben, wobei diese bei der Erfindung eben ausser Kraft gesetzt und daher gestrichelt dargestellt sind.

Die externen Schnittstellen der beiden zusätzlichen Softwaremodule 11.1 und 11.2 sind entsprechend Fig. 3 durch die beiden Pfeile 12.1 und 12.2 dargestellt. Beide Pfeile sind derart dargestellt, dass diese externen Schnittstellen einen bidirektionalen Zugriff auf die übertragenen Videodaten erlauben. Obwohl nämlich beim zusätzlichen Softwaremodul 11.1 die von der Kopie 2.2' empfangenen Videodaten typischerweise durch externe, auf dem Speicher 7 vorgängig abgelegte Videodaten ersetzt werden - also quasi nur ein schreibender, unidirektionaler Zugriff erfolgt - können die Videodaten von der Kamera 3 grundsätzlich auch auf dem Speicher 7 abgelegt oder, wie weiter vorne beschrieben, einfach nur modifiziert und an das Softwaremodul 2.1 weitergeleitet werden.

Auch beim zusätzlichen Softwaremodul 11.2 wird auf die von der Kopie 2.7' empfangenen Videodaten typischerweise nur unidirektional, d. h. lesend zugegriffen, nämlich um die empfangenen Videodaten abzugreifen, um sie auf dem Speicher 7 abzuspeichern. Hierbei werden die empfangenen Daten in der Regel unverändert zum Softwaremodul 2.8 und von da zum Display 4 weitergeleitet und dort dargestellt. Es ist jedoch auch möglich, diese empfangenen Videodaten mit dem zusätzlichen Softwaremodul 11.2 zu manipulieren oder durch andere, z. B. externe Videodaten zu ersetzen und diese manipulierten oder ersetzten Videodaten zum Softwaremodul 2.8 weiter zu leiten.

Zusammenfassend ist festzustellen, dass es die Erfindung auf einfache, elegante, kostengünstige und innovative Art und Weise erlaubt, auf die bei der Videotelefonie zwischen den Kommunikationspartnern übertragenen Videodaten zuzugreifen. Beim Sender können gezielt bestimmte Videodaten in den Sendepfad eingespiesen, übertragen und beim Empfänger abgegriffen werden. Die gesendeten und die empfangenen Daten sind mithin auf Datenträgern gespeichert und können so einer detaillierten Qualitätsbeurteilung unterzogen werden. Da das Einspeisen der externen Videodaten auf dem sendenden Gerät in den Sendepfad möglichst nahe bei der Kamera 3 und das Abgreifen der übertragenen Videodaten im Empfangsgerätes möglichst nahe beim Display erfolgen, befinden sich die Messpunkte quasi am Anfang und am Ende der Messkette, wodurch die Qualitätsbeurteilung der Videodaten, d. h. der übertragenen Videobilder, praktisch identisch mit dem Qualitätsempfinden der Benutzer ist. Der Datenfluss im und das Verhalten des Mobilfunktelefons 1 wird hierbei nicht verändert oder beeinträchtigt und das empfangene Videotelefoniebild kann wie beschrieben weiterhin auf dem Display des Empfängers angezeigt werden. Da auch keine zusätzliche Hardware, sondern pro Senderichtung lediglich ein zusätzliches Softwaremodul benötigt wird, kann die Erfindung bei bestehenden Kunden bzw. Messsystemen einfach und kostengünstig nachgerüstet werden.

## Patentansprüche

1. Verfahren zur Echtzeitübertragung von Videodaten mit einem Kommunikationsgerät (1) zur drahtlosen Kommunikation, wobei das Kommunikationsgerät (1) eine Gerätesoftware (2) und eine in die Gerätesoftware (2) integrierte Übertragungssoftware mit zumindest zwei Modulen (2.1, 2.2, 2.7, 2.8) zur Verarbeitung der Videodaten umfasst und die Videodaten bei der Echtzeitübertragung mit dem ersten (2.1, 2.7) und danach mit dem zweiten (2.2, 2.8) Modul verarbeitet werden, **dadurch gekennzeichnet, dass** bei einem Einschaltvorgang des Kommunikationsgerätes (1) ein zusätzliches, insbesondere gerätesoftwarefremdes, Softwaremodul (11.1, 11.2) in einen Arbeitsspeicher des Kommunikationsgerätes (1) geladen wird und die Videodaten bei der Echtzeitübertragung zwischen dem ersten (2.1, 2.7) und dem zweiten (2.2, 2.8) Modul mit dem zusätzlichen Softwaremodul (11.1, 11.2) verarbeitet werden sowie über eine externe Schnittstelle (12.1, 12.2) des zusätzlichen Softwaremoduls (11.1, 11.2) auf die Videodaten zugegriffen wird.

2. Verfahren nach Anspruch 1, wobei mit einer in das Kommunikationsgerät integrierten Kamera (3) interne Videodaten erzeugt und bei ihrer Übertragung zwischen dem ersten und dem zweiten Modul (2.1, 2.2), vorzugsweise möglichst nahe bei der Kamera (3), modifiziert werden, indem mit dem zusätzlichen Softwaremodul (11.1) die vom ersten Modul (2.1) übertragenen, internen Videodaten modifiziert (12.1) und die modifizierten Videodaten zum zweiten Modul (2.2) übertragen werden.

3. Verfahren nach Anspruch 1, wobei mit einer in das Kommunikationsgerät (1) integrierten Kamera (3) interne Videodaten erzeugt und bei ihrer Übertragung zwischen dem ersten und dem zweiten Modul (2.1, 2.2) durch externe Videodaten ersetzt werden, indem mit dem zusätzlichen Softwaremodul (11.1) anstelle der internen Videodaten die externen Videodaten zum zweiten Modul (2.2) übertragen werden, wobei die externen Videodaten mit einem vom Kommunikationsgerät (1) verschiedenen Gerät erzeugt und zuvor insbesondere in einen Speicher (7) des Kommunikationsgeräts (1) abgespeichert werden.

4. Verfahren nach Anspruch 3, wobei die externen Videodaten anstelle der internen Videodaten in einen Bildspeicher der integrierten Kamera (3) geschrieben werden.

5. Verfahren nach einem der Ansprüche 2 bis 4, wobei beim Übertragen der externen Videodaten zum zweiten Modul (2.2) wenigstens eine der folgenden Bedingungen erfüllt wird:
die externen Videodaten werden
a) synchron zu den internen Videodaten,
b) ohne Bildverluste,
c) ohne Bilddatenfehler,
d) in einem gleichen Bildformat wie die internen Videodaten und
e) mit einer gleichen Codierung wie die internen Videodaten
zum zweiten Modul übertragen.

6. Verfahren nach Anspruch 1, wobei vom Kommunikationsgerät (1) empfangene Videodaten mit der Übertragungssoftware zu einer Anzeigevorrichtung (4) übertragen, die vom ersten zum zweiten Modul (2.7, 2.8) übertragenen Videodaten mit dem zusätzlichen Softwaremodul (1 1.2) detektiert und für eine weitere Verarbeitung bereitgestellt werden, wobei die empfangenen Videodaten vorzugsweise
a) synchron detektiert und
b) auch auf der Anzeigevorrichtung (4) dargestellt werden.

7. Verfahren nach Anspruch 6, wobei die empfangenen Videodaten mit dem zusätzlichen Softwaremodul (11.2) abgegriffen werden, indem sie aus einem Bildspeicher der Anzeigevorrichtung (4) ausgelesen werden.

8. Verfahren nach einem der Ansprüche 6 oder 7, wobei die mit dem zusätzlichen Softwaremodul (11.2) abgegriffenen Videodaten auf einem Speicher (7) abgespeichert oder an ein externes Gerät weitergeleitet werden.

9. Verfahren nach einem der vorangehenden Ansprüche, wobei eine Reihenfolge (8, 8.1, 8.4) der beim Einschalten des Kommunikationsgeräts (1) in den Arbeitsspeicher des Kommunikationsgeräts (1) zu ladenden Module der Übertragungssoftware verändert wird, sodass das zusätzliche Softwaremodul (11.1, 11.2) zwischen den beiden Modulen (2.1, 2.2 bzw. 2.7, 2.8) geladen wird.

10. Verfahren nach Anspruch 9, wobei die Reihenfolge bestimmt wird, indem von einem Modul mittels eines in diesem Modul enthaltenen Verweises auf ein nachfolgendes Modul referenziert wird, und die Reihenfolge verändert wird (8.4', 8.5, 8.6), indem eines der beiden Module (2.2, 2.7) durch eine Kopie (2.2', 2.7') dieses Moduls mit einem modifizierten, auf das zusätzliche Softwaremodul (11.1, 11.2) referenzierenden, Verweis ersetzt wird und das zusätzliche Softwaremodul (11.1, 11.2) einen auf das andere Modul (2., 2.8) referenzierenden Verweis enthält.

11. Verfahren nach einem der vorangehenden Ansprüche, wobei die Module (2.1, 2.2, 2.7, 2.8) der Übertragungssoftware sowie das zusätzliche Softwaremodul (11.1, 11.2) als DLL-Dateien realisiert werden, welche in einem Speicher des Kommunikationsgeräts (1) abgespeichert werden.

12. Verfahren nach einem der vorangehenden Ansprüche, wobei die Videodaten in Echtzeit mit einer Bildrate von 1 bis 25 Bildern pro Sekunde, vorzugsweise mit einer Bildrate von 8 bis 15 Bildern pro Sekunde übertragen werden.

13. Verfahren nach einem der vorangehenden Ansprüche, wobei die Videodaten in einem Übertragungskanal mit einer Übertragungsrate zwischen einigen Kilobit und einigen Megabit pro Sekunde, insbesondere auf einem leitungsvermittelten Trägerkanal mit einer Übertragungsrate von 64 Kilobit pro Sekunde, übertragen werden.

14. Verfahren nach einem der vorangehenden Ansprüche, in einem Mobilfunknetz nach einem Mobilfunkstandard der dritten Mobilfunkgeneration, insbesondere in einem UMTS Mobilfunknetz.

15. Kommunikationsgerät (1) zur drahtlosen Kommunikation mit Mitteln zur Übertragung von Videodaten in Echtzeit mit einer auf einem Speicher (7) des Kommunikationsgerätes (1) gespeicherten Gerätesoftware (2) und einer in die Gerätesoftware (2) integrierten Übertragungssoftware mit zumindest zwei Modulen (2.1, 2.2, 2.7, 2.8) zur Verarbeitung der Videodaten bei der Echtzeitübertragung mit dem ersten (2.1) und danach mit dem zweiten (2.2) Modul, **dadurch gekennzeichnet, dass** auf einem Speicher des Kommunikationsgerätes (1) ein zusätzliches, insbesondere gerätesoftwarefremdes, Softwaremodul (11.1, 11.2) mit einer externen Schnittstelle (12.1, 12.2) gespeichert ist, welches bei einem Einschaltvorgang des Kommunikationsgeräts (1) in den Arbeitsspeicher des Kommunikationsgerätes (1) ladbar ist und die Videodaten bei der Echtzeitübertragung zwischen dem ersten (2.1, 2.7) und dem zweiten (2.2, 2.8) Modul mit dem zusätzlichen Softwaremodule (11.1, 11.2) verarbeitbar und über die externe Schnittstelle (12.1, 12.2) des zusätzlichen Softwaremoduls (11.1, 11.2) zugreifbar sind.

16. Testvorrichtung zur Beurteilung einer Qualität einer Übertragung von Videodaten in Echtzeit zwischen zwei Kommunikationsgeräten zur drahtlosen Kommunikation, wobei zumindest eines der Kommunikationsgeräte (1) nach Anspruch 15 ausgebildet ist.
